# NEW EUROPEAN PATENT SPECIFICATION

(11) **EP 3 347 127 B2**
(45) Date of publication and mention of the opposition decision: **07.06.2023**
(45) Mention of the grant of the patent: 26.02.2020
(21) Application number: 16770540.9
(22) Date of filing: 26.08.2016
(51) Int. Cl.: B01L 1/02, B01L 3/00, B65B 17/02

(54) **TRANSFER DEVICE**
ÜBERTRAGUNGSVORRICHTUNG
DISPOSITIF DE TRANSFERT

(30) Priority: 08.09.2015 GB 201515865
(43) Date of publication of application: 18.07.2018
(73) Proprietor: ChargePoint Technology Limited, Liverpool L24 9PB (GB)
(72) Inventor: ECCLES, Christopher, Liverpool L24 9PB (GB); WYLIE, Benjamin, Liverpool L24 9PB (GB)
(74) Representative: Bartle Read
(86) International application number: PCT/GB2016/052659
(87) International publication number: WO 2017/042536

(56) References cited:
- EP-A1- 0 662 373
- GB-A- 2 499 909
- US-A- 5 853 207
- US-A1- 2005 168 117
- US-A1- 2007 095 426
- US-A1- 2010 180 773
- US-A1- 2013 167 442

## Description

The present invention relates to a transfer device and method for transferring material.

More particularly, the invention relates to apparatus and method for assisting in material transfer during manufacturing processes which may be undertaken in a traditional clean room or in an isolation and/or containment system employed for operator and/or process protection.

The transfer of material from one aseptic vessel to another poses a number of problems particularly concerning maintenance of the aseptic environment to prevent the contamination of the material being transferred, the vessels themselves and the surrounding environment in which operators of such transfer devices may be located to effect the transfer of material.

The maintenance of sterility is of fundamental concern in many manufacturing processes, to safeguard against contamination of products being manufactured in the process. Exemplary industries using aseptic production in a traditional manner or in isolation and/or containment facilities include pharmaceutical, medical device, biotechnological and food industries.

Particular difficulty can arise where material for use in manufacture is required to be transferred from one sterile enclosure to another.

Developments in containment facilities led to the introduction of mating ports, otherwise known as rapid transfer (RTP) ports, to enable material to be transferred from one area to the other without contaminating the material or the surrounding environment.

However, these known ports are not without disadvantage. Commonly, the required location in the process enclosure is provided with a port which engages sealingly with a corresponding port of a transfer container. The mated ports can then be opened to enable material to be transferred from one area to another, see e.g. US2013/167442A1.

Such known transfer ports give rise to problems particularly when used in aseptic transfers. The presence of the seal or seals is an area of potential contamination which can be present on the exposed perimeter of the seals. Material to be transferred can easily come into contact with exposed sections of the seals compromising the sterility of the material and/or the process enclosure.

In accordance with an aspect of the present invention there is a provided a system and method as set out in claim 1 and 9, respectively.

The alpha and beta port are preferably engageable with one another and secured thereby via mating means.

The mating means may comprise a male member disposed on one of the alpha or beta port and a female member disposed on the other.

Suitably the male member comprises a bayonet fixing and the female a complementarily shaped recess.

Most suitably, the male member is disposed on the beta port and the female member on the alpha port.

More suitably still, each port comprises a plurality of mating members.

The mating members may be disposed on the doors to the alpha and beta.

The mating means may comprise a bayonet fitting, a push-fit connection or other suitable means.

The beta port may comprise a protective member.

The protective member may comprise a funnel shaped to overlie the junction between the alpha and beta and permit the passage of material therethrough.

The protective member further comprises a gaiter.

The gaiter is suitably made from a flexible material to enable the gaiter to permit movement of the protective member from a first stowed configuration whereby the protective member does not overlie the junction between alpha and beta ports and can be retained behind the door of the beta when the door is engaged in its closed configuration and movement to a deployed, extended configuration whereby the protective member is capable of overlying the junction between the alpha and beta port.

The flexible wall has means to determine the degree of deformation of the wall when moved from the stowed to the deployed configuration. Most suitably, this consists of two convolutes or segments giving a defined position when stowed and a defined position when deployed. More suitably still, there is an absence of a stable intermediate position.

The means comprises annular wall thickenings at predetermined positions.

The gaiter may comprise a flexible wall sufficiently rigid to hold the protective member in position in either configuration but flexible enough to permit movement.

The protective member and gaiter may be integrally formed. The flexible wall of the gaiter may be integrally formed with a transfer bag.

The protective member may be moved between its configurations by externally applied force.

The protective member may be operatively connected to actuating means disposed on a transfer bag which enable an operator to move the protective member between its configurations.

The actuating means may comprise a handle which an operator may use to apply force to move the protective member between its configurations.

The alpha port may be associated with actuating means for controlling the opening and closing of the ports.

The actuator may be operatively connected to the door of the alpha port.

The actuator may be capable of translational movement of the door and rotational movement of the door.

The actuator may be operatively connected to a curved arm to which the door is mounted at one end and to which the other end is mounted on a shoulder, wherein the shoulder is capable of translational movement to move the door rearwardly from the alpha port and capable of rotational movement to pivot the door away from the alpha port such the door does not obstruct the port.

Pivoting the door away from the alpha port as described above reduces the impact of such a mechanism on the air flow with an enclosure. Typically, an enclosure will have means for generating airflow in the ceiling which will displace air downwardly away from the ceiling. The door being moved out of the way of the port as described above ensures that the door has a relatively low profile and is disposed close to the enclosure wall when opened and moved out of the way of the port. Thus there is minimal profile of the door and its arm to present to the airflow thus reducing the impact of the door being open on the functioning of the enclosure.

The alpha port may further be associated with a chute for directing material way from the alpha port when transferred into the chamber.

The beta port may also comprise means to permanently engage the door once the door has been opened and then reengaged with and the port and in its closed configuration.

The protective member is suitably externally operated to move between its configurations. The protective member is suitably externally operated of the enclosed volume of the isolator barrier chamber and/or where the beta port or second port is connected to a transfer container, for example, the enclosed volume of the transfer container.

The opening and closing of the doors may be automated.

The system may be used for a rapid transfer port (RTP) system.

The enclosure may comprise any one or more of the following: chamber, isolator chamber, restrictive access barrier (RAB), screen or the like.

The system or device may be an aseptic transfer system or device.

The system may further comprise a module comprising a housing defining an enclosed chamber with an inlet and an outlet. The inlet is connectable to the beta port and the outlet is connectable to an enclosure. The inlet comprises the alpha port. The module permits the system to be used on enclosures not having an alpha port as described hereinabove but having a closable inlet to which the outlet of the module may connect.

The present invention will now be described, by way of example only, with reference to the accompanying figures, in which:
Fig. 1 is a perspective view of an assembly in accordance with the present invention;
Fig. 2 is a perspective view of a protective member in an extended configuration in accordance with the present invention;
Fig. 3 is a perspective view of a protective member in its stowed configuration in accordance with the present invention;
Fig. 4 is a perspective view of a beta port in accordance with the present invention with the door detached;
Fig. 5 is an external view of an alpha port in accordance with the present invention;
Fig. 6 is an internal view of an alpha port in accordance with the present invention;
Fig. 7 is a sectional view of a beta port attached to a container in accordance with the present invention;
Figs. 8a and b are a perspective and sectional view respectively of an alpha and beta port in accordance with the present invention with the doors displaced and a perspective view of the ports in this configuration;
Figs. 9 a to c are two perspective views and a sectional view respectively of an alpha and beta port in accordance with the present invention with the doors displaced and rotated, a perspective view of the ports in this configuration and an internal view of a chamber in this configuration;
Figs. 10 a and b are a perspective and sectional view respectively of an alpha and beta port in accordance with the present invention with the doors displaced and rotated and the protective member deployed, a perspective view of the ports in this configuration and an internal view of a chamber in this configuration;
Fig. 11 is a perspective view of a beta port with a lock out feature; and
Fig 12 is a sectional view of an alpha and beta port connected in accordance with the present invention showing the movement of material therethrough and the protective member deployed in its extended configuration;
Fig. 13 shows another embodiment in accordance with the present invention; and
Figs. 14 a to j show various configurations of the embodiment of Fig. 13.

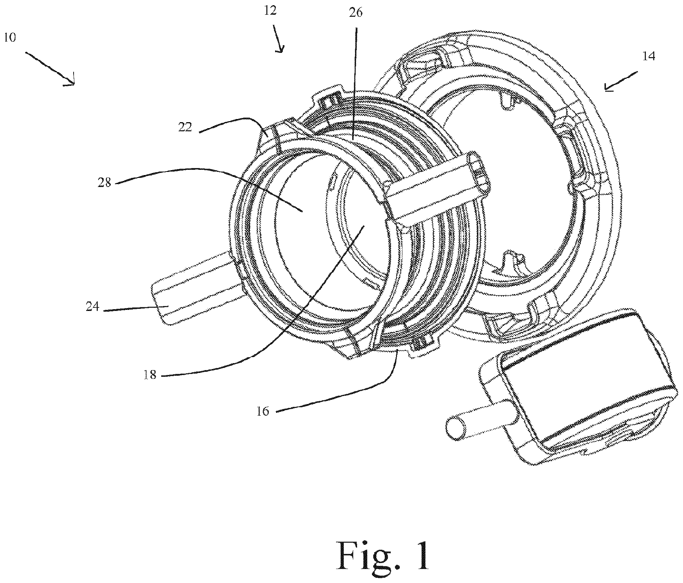

The figures show an assembly 10 (Fig. 1) having a passive beta port 12 and an active alpha port 14, the passive and the active are complementarily shaped such that they can engage with one another.

The passive beta port 12 has an annular flange 16 defining an annular opening to which is releasably securable a passive port door 18. Disposed at the distal end of the passive 12, at the opposite end to the annular flange 16 is an annular clamp 22 having two handles 24.

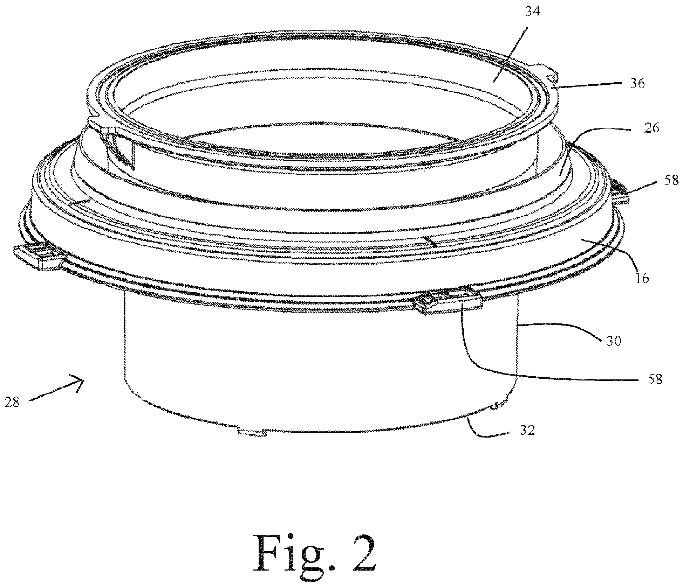

Disposed between the annular ring 16 and the annular clamp 22 is the gaiter 26 of the protective member 28 (Fig. 2). The protective member has a cylindrical body 30 forming a funnel through which material may pass. The free end 32 is sized so as to be capable of passing through the port formed between the alpha and beta ports 12, 14.

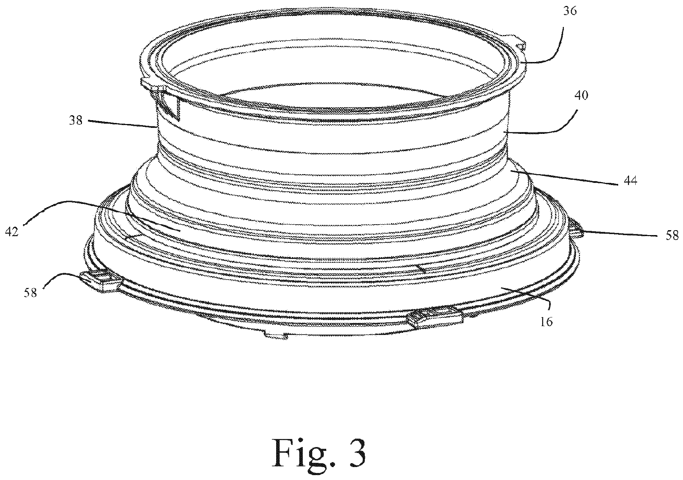

The other end 34 of the protective member 28 comprises a circular clamp flange 36 for co-operating with annular clamp 22 to secure a flexible walled container therebetween (not shown). Extending between clamp flange 36 and port flange 16 flexible gaiter 26 which enables the protective member 28 to move from a stowed configuration in which the cylindrical body 30 extends near to, or preferably slightly beyond the flange 16 (Fig. 3) and the extended configuration in which the cylindrical body 30 extends significantly beyond the flange 16 (Fig. 2).

The gaiter 26 has a flexible wall 38 which when lengthened, in the stowed configuration of the protective member, has a narrow section 40 proximal to the flange 36 and a wider section 42 proximal to the flange 16. The flexible wall has a waist 44 at which the gaiter 26 widens from the flange 36 towards the flange 16.

The gaiter 26 is formed in such a manner so as to have a number of discrete configurations. The flexible wall 38 of the gaiter 26 has annular thickenings to provide the means for determining the discrete configurations such that the movement of the protective member 28 from its stowed configuration to its extended configuration, and vice versa, is pre-determined so that the cylindrical body will extend a predetermined distance beyond the flange 36 and provides positive feedback to a user so that they can be certain that the protective member has been successfully deployed in the correct position. This consists of two convolutes or segments giving a defined position when stowed and a defined position when deployed. There is an absence of a stable intermediate position provided for by the flexible nature of the wall 38 and the thickenings such that the protective member is biased into the stowed or deployed position and will resist an intermediate position so that a user can be certain of the one of two configurations during use. This enable a user to determine when to transfer material and when to attach the port door 18 of the beta port after use.

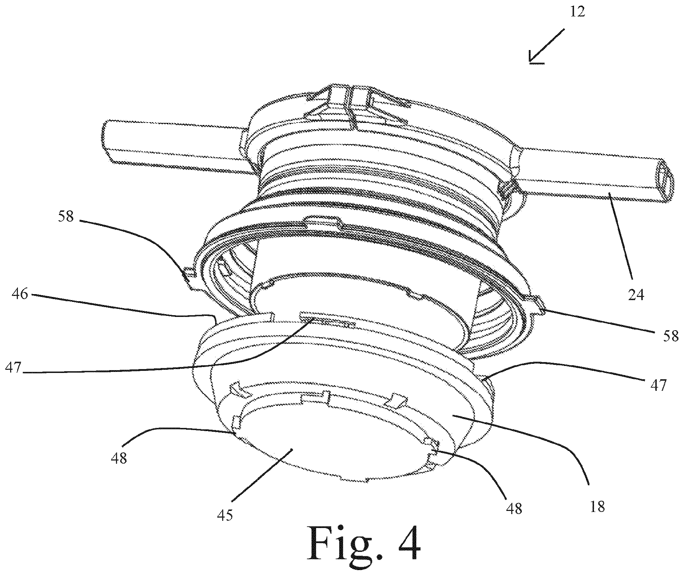

Fig. 4 shows the beta port 12 with passive door 18 detached. The passive door 18 has a hollow generally frustoconical body having circular planar end wall 45 and an open end 46 having four slots 47 disposed equidistantly circumferentially and complementarily shaped to the locating tabs 58 on annular flange 16, so as to receive the tabs 58 to selective retain the door 18 in place. Circumferentially and equidistantly disposed around the end wall 45 are locating tabs 48 complementarily shaped to retaining groves 49 disposed on the door 50 of the active port.

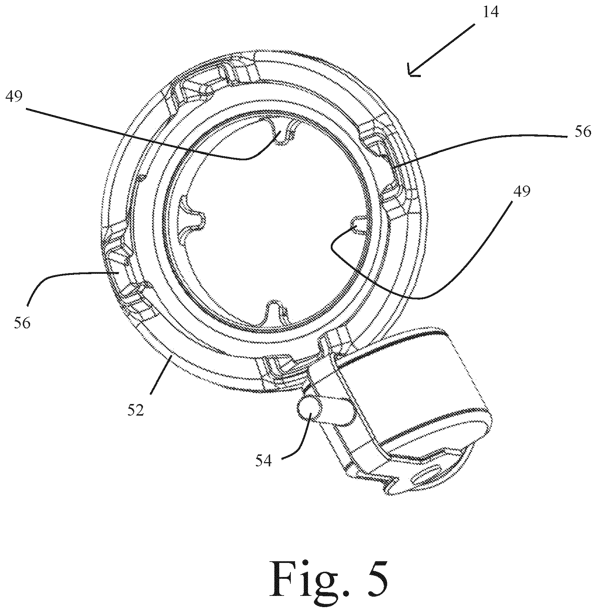

Fig. 5 shows the alpha port 14 closed with alpha port door 50 in its closed configuration, engaged with annular flange 52. To one side of the port 14 is an actuator 54 for actuating opening and closing of the alpha/beta ports when engaged.

The annular flange 52 has four recessed slots 56 disposed equidistantly around its circumference.

The slots are complementarily shaped to that of the bayonet locating tabs 58 disposed equidistantly about the circumference of annular ring 16 of the beta port.

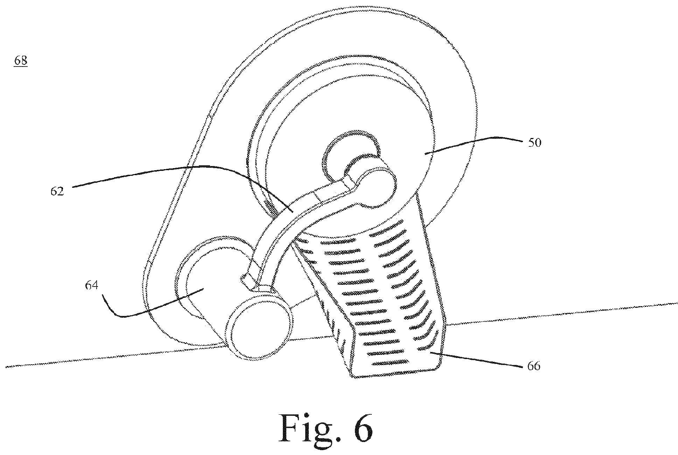

In use the locating tabs 58 assist in positioning the beta port in the correct alignment with the alpha port. Fig. 6 shows the alpha port door 50 in its closed configuration from inside the isolator barrier chamber. Operatively connected to the door 50 is actuating arm 62 which has a curved profile **which** is fixed at one end to an extendable shoulder 64 which also is capable of pivoting the arm away from the alpha port when in an open configuration. Extending from the lower circumference of the inner face of flange 52 is a chute 66 for receiving material and directing it away from the inner wall 68 of the chamber. The actuating arm 62 has a curved profile to provide a clearance with the chute when the alpha port door is closed. The pivot is located below and to one side of the chute to provide ergonomic opening of the door, meaning that (1) the angle of rotation required to open the door is preferably not more than 90 degrees, (2) the torque required to open or close the door is within ergonomic ranges, and (3) the arc of movement is such that the weight of the door provides a stable position when the door is open and a stable position when closed.

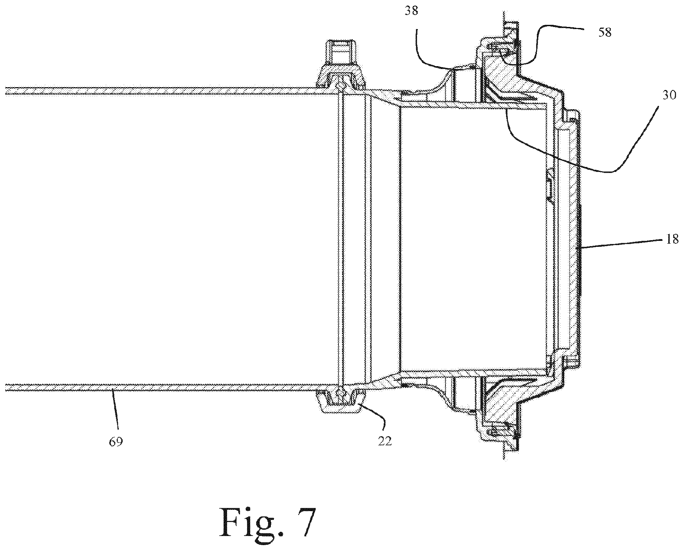

Fig. 7 shows the beta port attached to a container 69. In a first configuration the alpha and beta ports are connected; flanges 16 and 52 are engaged. The doors 18 and 50 are still in their closed configuration.

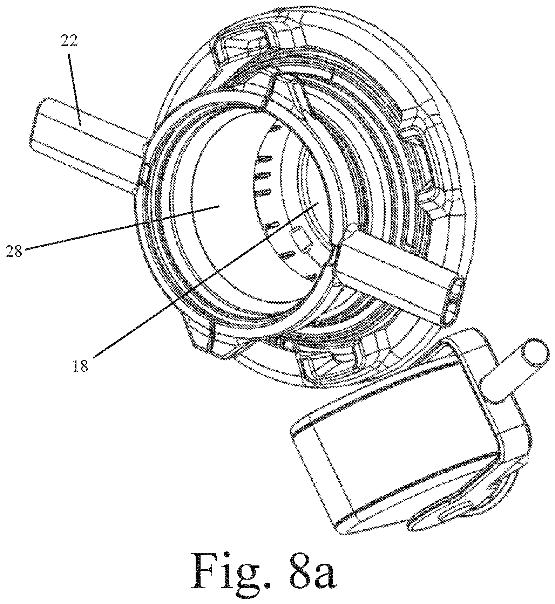

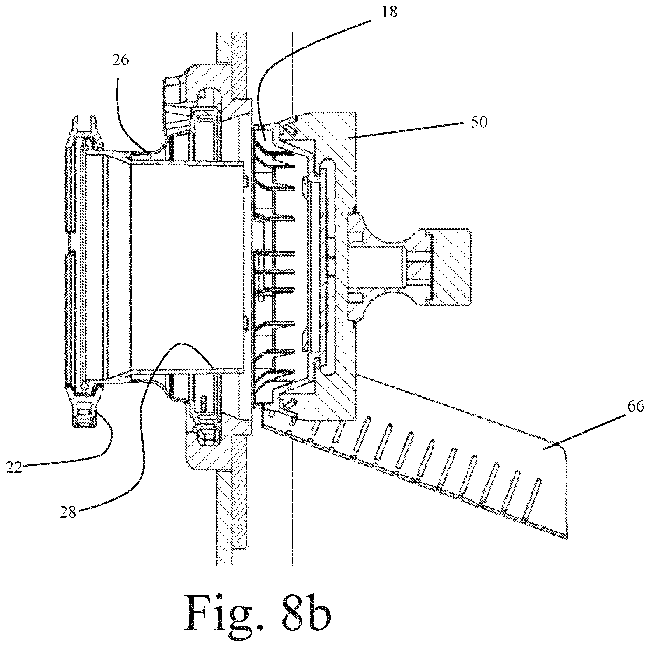

Figs. 8a and b show the doors 18 and 50 disengaged with their respective flanges 16, 52 and they have been translationally displaced toward the interior of the chamber.

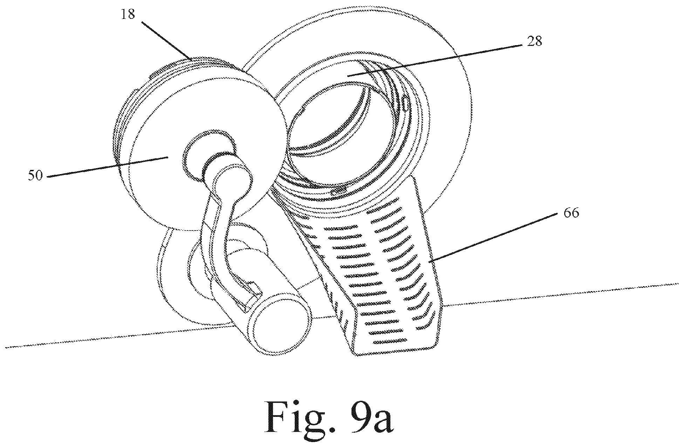

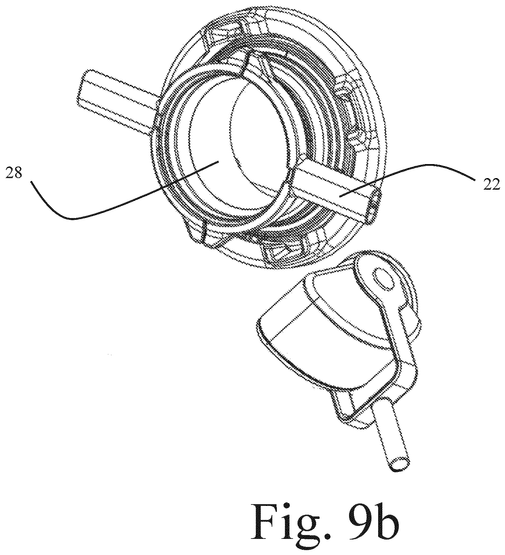

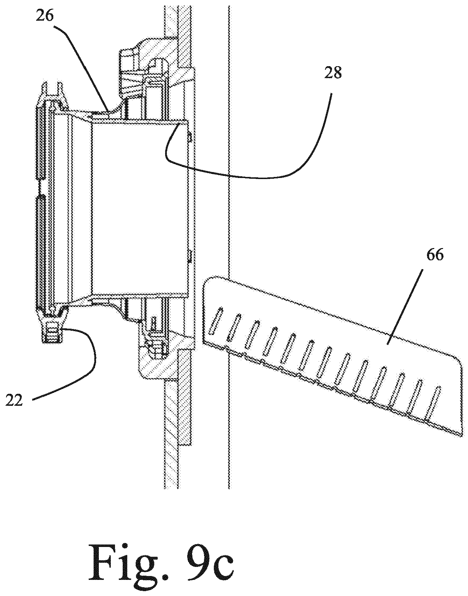

Figs. 9 a to c show the alpha and beta ports in a third configuration: the doors 18, 50 are engaged with one another; the door of the alpha port 50 disengaged from its respective flange 16 52; the Beta port door 18, disengaged from lugs 58 that lie on the internal surface of the proximal flange 16; and the actuating arm has pivoted about shoulder 64, rotating the doors 18, 50 out of the path of the alpha and beta ports such that there is a through hole therebetween connecting the chamber with the interior of the container to which the beta port can be secured. The cylindrical body 30 of the protective member 28 can be seen in its stowed configuration.

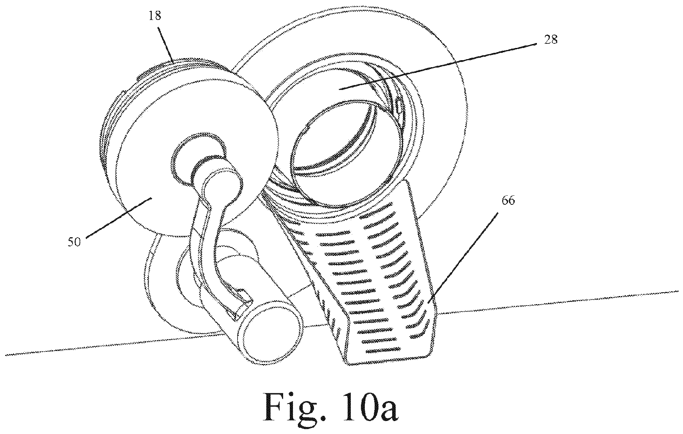

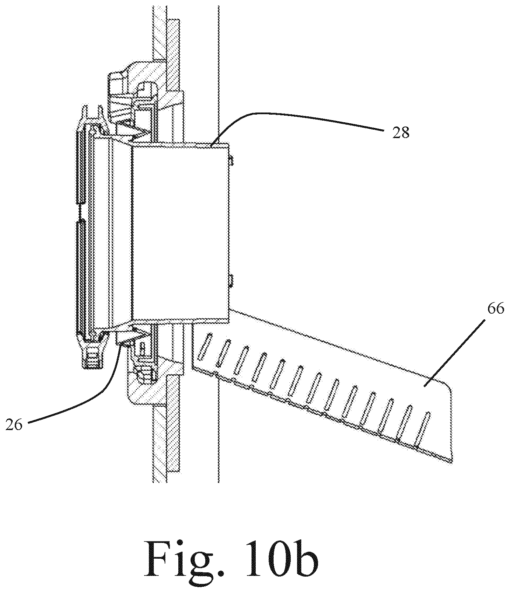

Figs. 10a and b show the third configuration of the alpha and beta ports (Figs. 9a to c) but with the protective member 28 deployed in its extended configuration. The flexible wall of the gaiter has deformed to permit the protective member to move to its extended configuration and the predetermined positions provided by the annular thickenings are clearly seen. Further, the cylindrical body 30 now extends over the junction between the alpha and beta ports and into the chamber, above the chute 66. Material can now be safely transferred through the ports without fear of contamination from any contaminants which may be present at the junction between the ports.

Once material has been transferred, the process is reversed to close the doors of the ports and disengage the beta from the alpha.

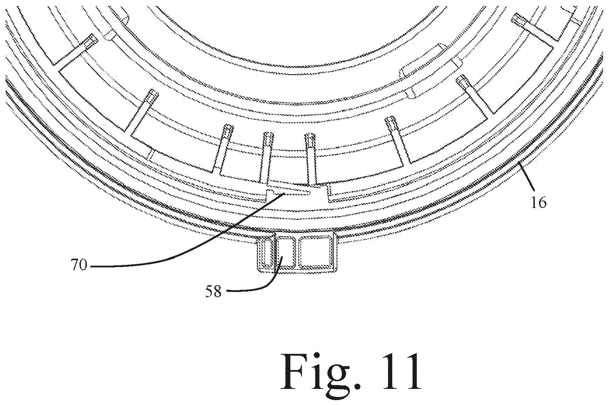

Fig. 11 shows a lock out function on the beta port which prevents the beta from being reused which will help maintain aseptic conditions. The lock out function ensures that when the door 18 is re-engaged with the flange 16 of the beta, the door is permanently fixed to the flange preventing reopening and reuse of the container and its port. The lock out feature comprises a non-return clip 70 on the internal surface of the proximal Passive flange, which prevents the lugs and slots of Passive door 20 and Passive flange 16 being rotated into alignment with their starting position, such that the Passive door cannot be readily detached from the Passive flange after transfer has taken place. The lock out function is primed automatically (without reliance on any other user action) when the Passive door is first released from the Passive flange.

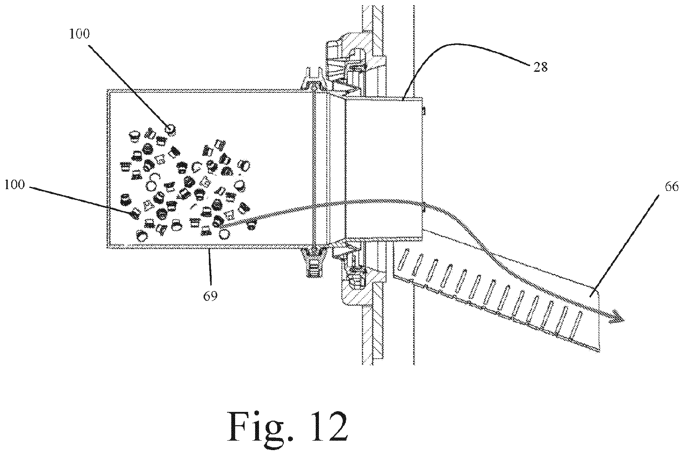

Fig. 12 shows the transfer of material 100 from container 69 into the interior of the chamber, the direction of travel shown by the arrow. The protective member is deployed and overlies the ring of concern thus avoiding contamination.

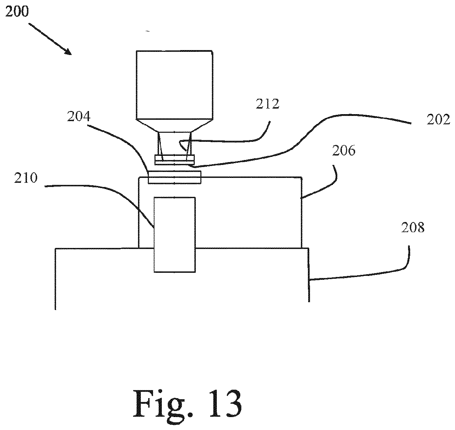

Fig. 13 shows an assembly 200 having a passive beta port 202 and an active alpha port 204, the passive and the active are complementarily shaped such that they can engage with one another and have features of that described hereinabove. Lying between the ports 202, 204 is a transfer module 206 comprising a chamber which has at one end the alpha port and at the other a connector for mating with a conventional isolator chamber 208 or the like. The advantage of the module is to enable existing systems to benefit from the advantages associated with the present invention. Extending between the transfer module and the isolator chamber is a chute 210 which is connectable to the protective member 212 when in its deployed configuration to facilitate through passage of material therethrough.

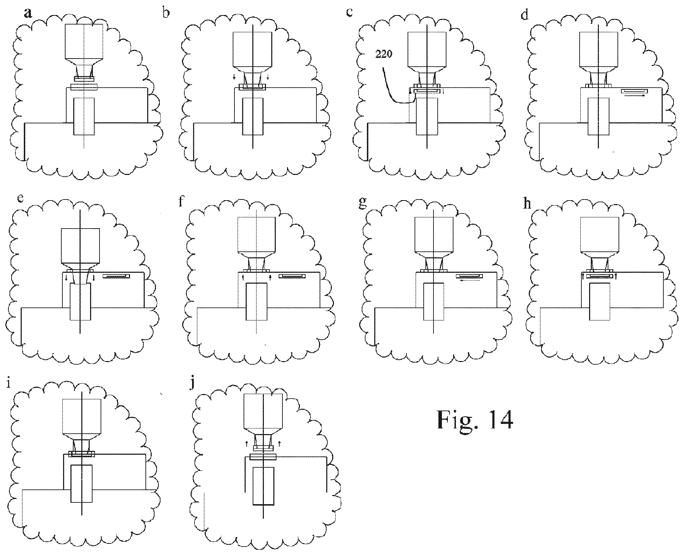

Figs. 14 a to j show schematically the various configurations of the assembly 200 to open and close the alpha and beta ports to facilitate the movement of material into the chamber and the movement of the two doors of the alpha and beta port when connected 220. The arrows show the direction of movement of the various components of the system during use.

## Claims

1. An externally operated alpha/beta port system (10), comprising an alpha port assembly (12) and a beta port assembly (14), wherein
a) the alpha port assembly (12), comprises:
i. a flange fixable to an enclosure and defining a port;
ii. a door connectable to said flange when in a closed configuration such that said port is closed, said door being moveable to an open configuration wherein the port is open;
b) a beta port assembly comprises:
i) a flange (16) fixable to a transfer container for containing material to be transferred, said flange defining a port;
ii) a door (18) connectable to said flange in a closed configuration, which is moveable from a closed configuration in which the door is sealingly engaged with the flange and the port closed and a second open configuration in which the door is displaced from the flange and the port is open;
wherein, when in the second open configuration the door is connected to the door (50) of the alpha port such that both doors can be moved to permit the transfer of material through the ports and wherein,
the alpha and/or beta port comprises a protective member (28) capable of moving between an extended and a stowed configuration, and wherein when the first and alpha and beta ports are sealingly engaged with one another, the protective member (28) can move from its stowed configuration to its extended configuration such that it overlies the junction between the first and second flange assemblies and permits the passage of material therethrough whilst protecting the material transferred from possible contamination from the junction,
wherein the beta port (14) comprises the protective member (28),
which comprises a gaiter (26), and wherein the gaiter is made from a flexible material to enable the gaiter to permit movement of the protective member from a first stowed configuration whereby the protective member (28) does not overlie the junction between alpha and beta ports (12, 14) and can be retained behind the door (18) of the beta when the door is engaged in its closed configuration and movement to a deployed, extended configuration whereby the protective member is capable of overlying the junction between the alpha and beta port (12,14), and;
wherein the flexible wall (38) has means to determine the degree of deformation of the wall (38) when moved from the stowed to the deployed configuration; and wherein the means comprises annular wall thickenings at predetermined positions and;
wherein the beta port (12) comprises protective member actuating means operatively connected to the protective member that can be operated externally of the internal volume of the isolator barrier chamber such that the protective member (28) can be moved between its configurations.

2. A system as claimed in claim 1 wherein the alpha/beta port is configured to be operated externally of the internal volume of the isolator barrier chamber; and/or optionally wherein the alpha and beta port are engageable with one another and secured thereby via mating means (47, 58); and optionally wherein the mating means may comprise a male member (58) disposed on one of the alpha or beta port and a female member (47) disposed on the other; and optionally wherein the male member (58) comprises a bayonet fixing (58) and the female (47) a complementarily shaped recess (47), or wherein the mating means comprises a push-fit connection; and optionally wherein the male member is disposed on the beta port (14) and the female member on the alpha port (12); and optionally wherein each port comprises a plurality of mating members; and optionally wherein the mating members are disposed on the doors to the alpha and beta ports.

3. A system as claimed in any one of claims 1 or 2 wherein the protective member (28) comprises a funnel (30) shaped to overlie the junction between the alpha and beta and permit the passage of material therethrough.

4. A system as claimed in any one of the preceding claims wherein the alpha port (14) is associated with door actuating means (54) for controlling the opening and closing of the ports; and optionally wherein the door actuator (54) is operatively connected to the door (50) of the alpha port; and optionally wherein the door actuator (54) is capable of translational movement of the door and rotational movement of the door; and optionally wherein the door actuator (54) is operatively connected to a curved arm (62) to which the door is mounted at one end and to which the other end is mounted on a shoulder(64), wherein the shoulder (64) is capable of translational movement to move the door rearwardly from the alpha port (14) and capable of rotational movement to pivot the door (50) away from the alpha port (14) such the door does not obstruct the port and optionally wherein an actuator (54) is used to translationally move and/or rotate the alpha port door; and optionally wherein when the two doors are in the open configuration such that the neither door obstructs the port, the port doors are separated from the port by a distance sufficient to minimise the risk of contact of the product being transferred with the edges and seals of the doors.

5. A system as claimed in any one of claims 1 to 4 wherein the alpha port (14) is associated with a chute (66) for directing material way from the alpha port (14) when transferred into the chamber; and/or optionally wherein the beta port (12) comprises means to permanently engage the door (18) once the door has been opened (18) and then reengaged with the port (12) in its closed configuration.

6. A system as claimed in any one of the previous claims comprising locking means (70) for permanently locking the beta port door (18) when the door is re-engaged with the beta port (12); and optionally having indicator means to indicate when the locking means has locked the door of the beta port; and optionally wherein the indicator means comprises a visual indicator; and optionally wherein the locking means (70) is primed automatically when the beta port door (18) is first released from the beta port flange (16).

7. A system as claimed in any one of the previous claims further comprising a sterilising module which is capable of overlying the door (18, 50) of a port and forming a chamber therebetween into which sterilising fluid may pass; and/or wherein the assembly comprises an intermediate configuration wherein the ports (12 ,14) are sealingly connected with the doors spaced apart and forming a chamber therebetween, said chamber having means for introducing sterilent means for decontamination of the outer surfaces of the doors and/or their seals; and wherein sterilent means comprises any one or more of UV, ozone, steam, vaporous hydrogen peroxide, chlorine dioxide and formaldehyde.

8. A method for transferring material between a first and a second enclosed volume comprising the use of a system as claimed in any one of claims 1 to 7 wherein the protective member (28) is moved between its stowed and deployed configurations by means external to the first and second volumes, said method comprising:
1) Engaging the alpha (14) and beta ports (12) such that the alpha and beta port doors (18, 50) are in a closed configuration and the flanges are engaged with and have a seal between one another;
2) moving the doors (18, 50) to their open configuration to permit the passage of material therethrough;
3) moving the protective member (28) from its stowed to its extended configuration such that it overlies the junction between the first and second flange and permits the passage of material through the first and second ports whilst protecting the material flowing therethrough from possible contamination from the junction.

9. A method as claimed in claim 8 wherein moving the protective member from its stowed to extended configuration is achieved by externally operating the protective member actuating means.

10. A method as claimed in claim 8 or 9 further comprising the subsequent step of re-engaging the second port door (18) with said second flange and locking said door to said flange such that the door can no longer be disengaged from said second flange; and optionally wherein the locking means (70) is primed automatically when the second port door (18) is first released from the second flange.

## Patentansprüche

1. Extern betätigtes Alpha-/Beta-Anschlusssystem (10), umfassend eine Alpha-Anschlussbaugruppe (12) und eine Beta-Anschlussbaugruppe (14), wobei
a) die Alpha-Anschlussbaugruppe (12) Folgendes umfasst:
i. einen Flansch, der an einer Umhüllung fixierbar ist und einen Anschluss definiert;
ii. eine Klappe, die mit dem Flansch verbindbar ist, wenn sie in einer geschlossenen Konfiguration ist, so dass der Anschluss geschlossen ist, wobei die Klappe in eine offene Konfiguration bewegbar ist, in welcher der Anschluss offen ist;
b) eine Beta-Anschlussbaugruppe Folgendes umfasst:
i) einen Flansch (16), der an einem Übertragungsbehälter fixierbar ist, um das zu übertragende Material zu enthalten, wobei der Flansch einen Anschluss definiert;
ii) eine Klappe (18), die mit dem Flansch in einer geschlossenen Konfiguration verbindbar ist, die von einer geschlossenen Konfiguration, in der die Klappe dichtend mit dem Flansch in Eingriff steht und der Anschluss geschlossen ist, und in eine zweite offene Konfiguration, in der die Klappe von dem Flansch verschoben ist und der Anschluss offen ist, bewegbar ist;
wobei, wenn in der zweiten offenen Konfiguration, die Klappe mit der Klappe (50) des Alpha-Anschlusses verbunden ist, so dass beide Klappen bewegt werden können, um die Übertragung von Material durch die Anschlüsse zu ermöglichen,
und wobei,
der Alpha- und/oder Beta-Anschluss ein Schutzelement (28) umfasst, das sich zwischen einer ausgefahrenen und einer verstauten Konfiguration bewegen kann, und wobei, wenn der erste und der Alpha- und Beta-Anschluss dichtend miteinander in Eingriff stehen, sich das Schutzelement (28) von seiner verstauten Konfiguration in seine ausgefahrene Konfiguration bewegen kann, sodass es die Verbindungsstelle zwischen der ersten und der zweiten Flanschbaugruppe überlagert und den Durchgang von Material dadurch zulässt, während das übertragene Material vor einer möglichen Kontamination von der Verbindungsstelle geschützt wird,
wobei der Beta-Anschluss (14) das Schutzelement (28) umfasst,
das eine Manschette (26) umfasst, und wobei die Manschette aus einem flexiblen Material hergestellt ist, um es der Manschette zu ermöglichen, eine Bewegung des Schutzelements von einer ersten verstauten Konfiguration zuzulassen, wodurch das Schutzelement (28) die Verbindungsstelle zwischen dem Alpha- und Beta-Anschluss (12, 14) nicht überlagert und hinter der Klappe (18) des Betas zurückgehalten werden kann, wenn die Klappe in ihrer geschlossenen Konfiguration und Bewegung in eine eingesetzte, ausgefahrenen Konfiguration in Eingriff steht, wodurch das Schutzelement die Verbindungsstelle zwischen dem Alpha- und Beta-Anschluss (12, 14) überlagern kann, und;
wobei die flexible Wand (38) Mittel zum Bestimmen des Verformungsgrades der Wand (38) aufweist, wenn sie von der verstauten in die eingesetzte Konfiguration bewegt wird; und wobei das Mittel ringförmige Wandverdickungen an vorbestimmten Positionen umfasst und;
wobei der Beta-Anschluss (12) ein Schutzelementbetätigungsmittel umfasst, das mit dem Schutzelement, das außerhalb des Innenvolumens der Isoliersperrkammer betreibbar ist, so dass das Schutzelement (28) zwischen seinen Konfigurationen bewegt werden kann, wirkverbunden ist.

2. System nach Anspruch 1, wobei der Alpha-/Beta-Anschluss konfiguriert ist, um außerhalb des Innenvolumens der Isoliersperrkammer betrieben zu werden; und/oder wobei wahlweise der Alpha- und der Beta-Anschluss miteinander in Eingriff bringbar sind und dadurch über ein Passmittel (47, 58) gesichert sind; und wobei wahlweise das Passmittel ein Steckelement (58), das an einem von dem Alpha- oder Beta-Anschluss angeordnet ist und ein Buchsenelement (47) umfassen kann, das auf dem anderen angeordnet ist; und wobei wahlweise das Steckelement (58) einen Bajonettverschluss (58) und die Buchse (47) eine komplementär geformte Aussparung (47) umfasst, oder wobei das Passmittel eine Steckverbindung umfasst; und wobei wahlweise das Steckelement an dem Beta-Anschluss (14) angeordnet ist und das Buchsenelement an dem Alpha-Anschluss (12) angeordnet ist; und wobei wahlweise jeder Anschluss eine Vielzahl von Passelementen umfasst; und wobei wahlweise die Passelemente an den Klappen zu den Alpha- und Beta-Anschlüssen angeordnet sind.

3. System nach einem der Ansprüche 1 oder 2, wobei das Schutzelement (28) einen Trichter (30) umfasst, der geformt ist, um die Verbindungsstelle zwischen dem Alpha und dem Beta zu überlagern und den Durchgang von Material dadurch zuzulassen.

4. System nach einem der vorstehenden Ansprüche, wobei der Alpha-Anschluss (14) Klappenbetätigungsmitteln (54) zum Steuern des Öffnens und des Schließens der Anschlüsse zugeordnet ist; und wobei wahlweise das Klappenbetätigungsmittel (54) mit der Klappe (50) des Alpha-Anschlusses wirkverbunden ist; und wobei wahlweise das Klappenbetätigungsmittel (54) zu einer Übersetzungsbewegung der Klappe und zu einer Drehbewegung der Klappe fähig ist; und wobei wahlweise das Klappenbetätigungsmittel (54) mit einem gekrümmten Arm (62) wirkverbunden ist, an dem die Klappe an einem Ende montiert ist und an dem das andere Ende an einer Schulter (64) montiert ist, wobei die Schulter (64) zu einer Übersetzungsbewegung fähig ist, um die Klappe von dem Alpha-Anschluss (14) nach hinten zu bewegen und zu einer Drehbewegung fähig ist, um die Klappe (50) von dem Alpha-Anschluss (14) weg zu schwenken, sodass die Klappe den Anschluss nicht behindert, und wobei wahlweise ein Betätigungsmittel (54) verwendet wird, um die Alpha-Anschlussklappe übersetzend zu bewegen und/oder zu drehen; und wobei wahlweise, wenn sich die zwei Klappen in der offenen Konfiguration befinden, so dass keine Klappe den Anschluss behindert, die Anschlussklappen um einen Abstand von dem Anschluss getrennt sind, der ausreicht, um das Risiko eines Kontakts des Produkts, das mit den Rändern und Dichtungen der Klappen übertragen wird, zu minimieren.

5. System nach einem der Ansprüche 1 bis 4, wobei der Alpha-Anschluss (14) einer Rutsche (66) zugeordnet ist, um Material entlang des Alpha-Anschlusses (14) zu leiten, wenn dieses in die Kammer übertragen wird; und/oder wobei wahlweise der Beta-Anschluss (12) ein Mittel umfasst, um die Klappe (18) dauerhaft in Eingriff zu bringen, sobald die Klappe geöffnet wurde (18) und dann in ihrer geschlossenen Konfiguration erneut mit dem Anschluss (12) in Eingriff gebracht wird.

6. System nach einem der vorstehenden Ansprüche, umfassend ein Verriegelungsmittel (70) zum dauerhaften Verriegeln der Beta-Anschlussklappe (18), wenn die Klappe mit dem Beta-Anschluss (12) erneut in Eingriff gebracht wird; und wahlweise aufweisend ein Anzeigemittel, um anzugeben, wann das Verriegelungsmittel die Klappe des Beta-Anschlusses verriegelt hat; und wobei wahlweise das Anzeigemittel eine visuelle Anzeige umfasst; und wobei wahlweise das Verriegelungsmittel (70) automatisch vorbereitet wird, wenn die Beta-Anschlussklappe (18) zuerst von dem Beta-Anschlussflansch (16) freigegeben wird.

7. System nach einem der vorstehenden Ansprüche, ferner umfassend ein Sterilisationsmodul, das zum Überlagern der Klappe (18, 50) eines Anschlusses und zum Bilden einer Kammer dazwischen fähig ist, in die Sterilisationsfluid eintreten kann; und/oder wobei die Baugruppe eine Zwischenkonfiguration umfasst, wobei die Anschlüsse (12, 14) dichtend mit den Klappen verbunden sind, die voneinander beabstandet sind und eine Kammer dazwischen bilden, wobei die Kammer Mittel zum Einführen von Sterilisationsmitteln zur Dekontamination der Außenoberflächen der Klappen und/oder ihrer Dichtungen aufweist; und wobei das Sterilisationsmittel eines oder mehrere von UV, Ozon, Dampf, dampfförmigem Wasserstoffperoxid, Chlordioxid und Formaldehyd umfasst.

8. Verfahren zum Übertragen von Material zwischen einem ersten und einem zweiten eingeschlossenen Volumen, das die Verwendung eines Systems nach einem der Ansprüche 1 bis 7 umfasst, wobei das Schutzelement (28) zwischen seiner verstauten und eingesetzten Konfigurationen durch Mittel außerhalb des ersten und des zweiten Volumens bewegt wird, wobei das Verfahren Folgendes umfasst:
1) Ineingriffbringen der Alpha- (14) und Beta-Anschlüsse (12), sodass die Alpha- und Beta-Anschlussklappen (18, 50) in einer geschlossenen Konfiguration sind und die Flansche miteinander in Eingriff stehen und eine Dichtung dazwischen aufweisen;
2) Bewegen der Klappen (18, 50) in ihre offene Konfiguration, um den Durchgang von Material dadurch zuzulassen;
3) Bewegen des Schutzelements (28) von seiner verstauten in seine ausgefahrene Konfiguration, so dass es die Verbindungsstelle zwischen dem ersten und dem zweiten Flansch überlagert und den Durchgang von Material durch den ersten und den zweiten Anschluss zulässt, während das dadurch fließende Material vor einer möglichen Kontamination von der Verbindungsstelle geschützt wird.

9. Verfahren nach Anspruch 8, wobei das Bewegen des Schutzelements von seiner verstauten in seine ausgefahrene Konfiguration durch externes Betätigen des Schutzelementbetätigungsmittels erreicht wird.

10. Verfahren nach Anspruch 8 oder 9, ferner umfassend den nachfolgenden Schritt des erneuten Ineingriffbringens der zweiten Anschlussklappe (18) mit dem zweiten Flansch und Verriegeln der Klappe mit dem Flansch, sodass die Klappe nicht mehr von dem zweiten Flansch außer Eingriff gebracht werden kann; und wobei wahlweise das Verriegelungsmittel (70) automatisch vorbereitet wird, wenn die zweite Anschlussklappe (18) zuerst von dem zweiten Flansch freigegeben wird.

## Revendications

1. Système de port alpha/bêta commandé de l'extérieur (10), comprenant un ensemble port alpha (12) et un ensemble port bêta (14), dans lequel
a) l'ensemble port alpha (12), comprend :
i. une bride pouvant être fixée à une enceinte et définissant un port ;
ii. une porte pouvant être reliée à ladite bride lorsqu'on se trouve dans une configuration fermée de telle sorte que ledit port est fermé, ladite porte pouvant être déplacée à une configuration ouverte dans laquelle le port est ouvert ;
b) un ensemble port bêta comprend :
i) une bride (16) pouvant être fixée à un récipient de transfert pour contenir un matériau à transférer, ladite bride définissant un port ;
ii) une porte (18) pouvant être reliée à ladite bride dans une configuration fermée, laquelle peut être déplacée d'une configuration fermée dans laquelle la porte est en prise étanche avec la bride et le port est fermé et une seconde configuration ouverte dans laquelle la porte est déplacée par rapport à la bride et le port est ouvert ;
dans lequel, lorsqu'on se trouve dans la seconde configuration ouverte la porte est reliée à la porte (50) du port alpha de telle sorte que l'une et l'autre des portes peuvent être déplacées pour permettre le transfert de matériau à travers les ports
et dans lequel,
le port alpha et/ou bêta comprend un élément de protection (28) capable de se déplacer entre une configuration étendue et une configuration repliée, et dans lequel lorsque les premiers ports alpha et bêta sont en prise étanche l'un avec l'autre, l'élément de protection (28) peut se déplacer de sa configuration repliée à sa configuration étendue de telle sorte qu'il recouvre la jonction entre les premier et second ensembles de bride et permet le passage de matériau à travers ceux-ci tout en protégeant le matériau transféré d'une possible contamination par la jonction,
dans lequel le port bêta (14) comprend l'élément de protection (28),
qui comprend un soufflet (26), et dans lequel le soufflet est fabriqué à partir d'un matériau flexible pour permettre au soufflet d'autoriser un mouvement de l'élément de protection d'une première configuration repliée selon laquelle l'élément de protection (28) ne recouvre pas la jonction entre les ports alpha et bêta (12, 14) et peut être retenu derrière la porte (18) du bêta lorsque la porte est en prise dans sa configuration fermée et un mouvement vers une configuration étendue déployée selon laquelle l'élément de protection est capable de recouvrir la jonction entre les ports alpha et bêta (12, 14), et ;
dans lequel la paroi flexible (38) a un moyen pour déterminer le degré de déformation de la paroi (38) lors d'un déplacement de la configuration repliée à la configuration déployée ; et dans lequel le moyen comprend des épaississements annulaires de paroi au niveau de positions prédéterminées et ;
dans lequel le port bêta (12) comprend un moyen d'actionnement d'élément de protection relié fonctionnellement à l'élément de protection lequel peut être mis en fonctionnement à l'extérieur du volume interne de la chambre de barrière isolante, de telle sorte que l'élément de protection (28) peut être déplacé entre ses configurations.

2. Système selon la revendication 1 dans lequel le port alpha/bêta est conçu pour être mis en fonctionnement à l'extérieur du volume interne de la chambre de barrière isolante ; et/ou facultativement dans lequel les ports alpha et bêta peuvent venir en prise l'un avec l'autre et sont de ce fait fixés par l'intermédiaire d'un moyen d'accouplement (47, 58) ; et facultativement dans lequel le moyen d'accouplement peut comprendre un élément mâle (58) disposé sur l'un parmi le port alpha ou bêta et un élément femelle (47) disposé sur l'autre ; et facultativement dans lequel l'élément mâle (58) comprend une fixation à baïonnette (58) et l'élément femelle (47) un évidement profilé de manière complémentaire (47), ou dans lequel le moyen d'accouplement comprend une liaison par emboîtement ; et facultativement dans lequel l'élément mâle est disposé sur le port bêta (14) et l'élément femelle sur le port alpha (12) ; et facultativement dans lequel chaque port comprend une pluralité d'éléments d'accouplement ; et facultativement dans lequel les éléments d'accouplement sont disposés sur les portes vers les ports alpha et bêta.

3. Système selon l'une quelconque des revendications 1 ou 2 dans lequel l'élément de protection (28) comprend un entonnoir (30) profilé pour recouvrir la jonction entre les alpha et bêta et permettre le passage de matériau à travers ceux-ci.

4. Système selon l'une quelconque des revendications précédentes dans lequel le port alpha (14) est associé à un moyen d'actionnement de porte (54) pour commander l'ouverture et la fermeture des ports ; et facultativement dans lequel l'actionneur de porte (54) est relié fonctionnellement à la porte (50) du port alpha ; et facultativement dans lequel l'actionneur de porte (54) est capable d'effectuer un mouvement de translation de la porte et un mouvement de rotation de la porte ; et facultativement dans lequel l'actionneur de porte (54) est fonctionnellement relié à un bras incurvé (62) auquel la porte est montée au niveau d'une extrémité et auquel l'autre extrémité est montée sur un épaulement (64), l'épaulement (64) étant capable d'effectuer un mouvement de translation pour déplacer la porte vers l'arrière à partir du port alpha (14) et capable d'effectuer un mouvement de rotation pour pivoter la porte (50) à l'écart du port alpha (14) de telle sorte que la porte n'obstrue pas le port et facultativement dans lequel un actionneur (54) est utilisé pour déplacer par translation et/ou mettre en rotation la porte de port alpha ; et facultativement dans lequel lorsque les deux portes sont dans la configuration ouverte de telle sorte qu'aucune porte n'obstrue le port, les portes de port sont séparées du port d'une distance suffisante pour minimiser le risque de contact du produit étant transféré avec les bords et les joints des portes.

5. Système selon l'une quelconque des revendications 1 à 4 dans lequel le port alpha (14) est associé à une goulotte (66) permettant de diriger le chemin de matériau à partir du port alpha (14) lors d'un transfert dans la chambre ; et/ou facultativement dans lequel le port bêta (12) comprend un moyen pour mettre en prise de manière permanente la porte (18) une fois que la porte a été ouverte (18) puis remise en prise avec le port (12) dans sa configuration fermée.

6. Système selon l'une quelconque des revendications précédentes comprenant un moyen de verrouillage (70) pour verrouiller de manière permanente la porte de port bêta (18) lorsque la porte est remise en prise avec le port bêta (12) ; et facultativement ayant un moyen d'indication pour indiquer lorsque le moyen de verrouillage a verrouillé la porte du port bêta ; et facultativement dans lequel le moyen d'indication comprend un indicateur visuel ; et facultativement dans lequel le moyen de verrouillage (70) est amorcé automatiquement lorsque la porte de port bêta (18) est d'abord libérée de la bride de port bêta (16).

7. Système selon l'une quelconque des revendications précédentes comprenant en outre un module de stérilisation qui est capable de recouvrir la porte (18, 50) d'un port et de former une chambre entre ceux-ci vers l'intérieur de laquelle un fluide de stérilisation peut passer ; et/ou dans lequel l'ensemble comprend une configuration intermédiaire dans laquelle les ports (12, 14) sont reliés de manière étanche aux portes espacées et formant une chambre entre elles, ladite chambre ayant un moyen pour introduire un moyen stérilisant pour une décontamination des surfaces externes des portes et/ou de leurs joints ; et dans lequel le moyen stérilisant comprend l'une quelconque ou plusieurs quelconques parmi UV, ozone, vapeur, peroxyde d'hydrogène vaporeux, dioxyde de chlore et formaldéhyde.

8. Procédé de transfert de matériau entre un premier et un second volume fermé comprenant l'utilisation d'un système tel que revendiqué dans l'une quelconque des revendications 1 à 7 dans lequel l'élément de protection (28) est déplacé entre ses configurations repliée et déployée par un moyen externe aux premier et second volumes, ledit procédé comprenant :
1) la mise en prise de ports alpha (14) et bêta (12) de telle sorte que les portes de ports alpha et bêta (18, 50) sont dans une configuration fermée et que les brides sont en prise l'une avec l'autre et ont un joint entre elles ;
2) le déplacement des portes (18, 50) à leur configuration ouverte pour permettre le passage de matériau à travers celles-ci ;
3) le déplacement de l'élément de protection (28) de sa configuration repliée à sa configuration étendue de telle sorte qu'il recouvre la jonction entre la première et la seconde bride et permet le passage de matériau à travers les premier et second ports tout en protégeant le matériau s'écoulant à travers ceux-ci d'une possible contamination par la jonction.

9. Procédé selon la revendication 8 dans lequel le déplacement de l'élément de protection de sa configuration repliée à sa configuration étendue est réalisé en faisant fonctionner de manière externe le moyen d'actionnement d'élément de protection.

10. Procédé selon la revendication 8 ou 9 comprenant en outre l'étape ultérieure de remise en prise de la seconde porte de port (18) avec ladite seconde bride et de verrouillage de ladite porte à ladite bride de telle sorte que la porte ne peut plus être désolidarisée de ladite seconde bride ; et facultativement dans lequel le moyen de verrouillage (70) est amorcé automatiquement lorsque la seconde porte de port (18) est d'abord libérée de la seconde bride.
